# EUROPEAN PATENT APPLICATION

(11) **EP 4 760 523 A1**
(43) Date of publication of application: **17.06.2026**
(21) Application number: 24857752.0
(22) Date of filing: 01.04.2024
(51) Int. Cl.: G06F 16/23

(54) **METHOD FOR EXECUTING DATABASE OPERATION INSTRUCTION, APPARATUS, DEVICE AND STORAGE MEDIUM**

(30) Priority: 31.08.2023 CN 202311117702; 19.09.2023 CN 202311211296
(71) Applicant: Huawei Cloud Computing Technologies Co., Ltd., Gui'an New District, Guizhou 550025 (CN)
(72) Inventor: GAO, Congli, Guiyang, Guizhou 550025 (CN); MA, Wenlong, Guiyang, Guizhou 550025 (CN); ZENG, Kai, Guiyang, Guizhou 550025 (CN); LI, Jingjin, Guiyang, Guizhou 550025 (CN); GAO, Ruoyue, Guiyang, Guizhou 550025 (CN); ZHANG, Wenliang, Guiyang, Guizhou 550025 (CN)
(74) Representative: Grünecker Patent- und Rechtsanwälte PartG mbB
(86) International application number: PCT/CN2024/085276
(87) International publication number: WO 2025/044202

(57) **Abstract**

A method and an apparatus for executing a database operation instruction, a device, and a storage medium relate to the field of computer technologies. Automatic execution of a series of complex operations including at least one AI operation and at least one data processing operation may be triggered by using a table operation instruction. A user only needs to input a simple table operation instruction, and does not need to input a series of complex operation instructions, thereby improving operation efficiency.

## Description

This disclosure claims priorities to Chinese Patent Application No. 202311117702.3, filed on August 31, 2023 and entitled "DATABASE SYSTEM AND AI MODEL TRAINING METHOD" and Chinese Patent Application No. 202311211296.7, filed on September 19, 2023 and entitled "METHOD AND APPARATUS FOR EXECUTING DATABASE OPERATION INSTRUCTION, DEVICE, AND STORAGE MEDIUM", both of which are incorporated herein by reference in their entireties.

### TECHNICAL FIELD

This disclosure relates to the field of computer technologies, and in particular, to a method and an apparatus for executing a database operation instruction, a device, and a storage medium.

### BACKGROUND

Nowadays, an artificial intelligence (artificial intelligence, AI) technology has been applied to various fields. A database system often relates to AI-related processing, for example, creating an AI model and deleting an AI model. In the database system, the AI-related processing is not only a simple data computing process, but a complex processing process that combines a database-related operation and an AI-related operation. In this complex processing process, a user usually needs to input a series of instructions for complete execution, and instruction complexity is high, resulting in low operation efficiency.

### SUMMARY

This disclosure provides a method and an apparatus for executing a database operation instruction, a device, and a storage medium, to improve operation efficiency of a user.

According to a first aspect, a method for executing a database operation instruction is provided. The method is applied to a database system. The method includes: first receiving a first table operation instruction, where the first table operation instruction is for adding a column to a data table; then determining a corresponding sub-operation set based on the first table operation instruction, where the sub-operation set includes at least one data processing operation and at least one artificial intelligence AI operation, and the at least one artificial intelligence AI operation includes obtaining an AI model through training based on data in the data table; then providing the data in the data table for the AI server, and sending a model creation request to the AI server, where the model creation request indicates the AI server to obtain the AI model through training based on the data in the data table; and finally, obtaining the AI model.

The first table operation instruction is a column adding instruction of an extended syntax. Based on the first table operation instruction, creation of the AI model is triggered and the AI model is trained, to finally obtain a series of operations of the AI model. The obtained AI model includes a model algorithm type, a model mathematical parameter (a value after training) of the AI model, and the like.

In this way, automatic execution of a series of complex operations including at least one AI operation and at least one data processing operation may be triggered by using the table operation instruction. A user only needs to input a simple table operation instruction, and does not need to input a series of complex operation instructions, thereby improving operation efficiency.

In a possible implementation, the first table operation instruction may include a first key field, the first key field is for defining the column as a predict column, and the predict column is defined to record an inference result of the AI model. The first table operation instruction may be determined based on the first key field, to determine the corresponding sub-operation set.

The first key field may be set to any field that is not used in the database operation instruction, and the first key field may be added to a specified location of the first table operation instruction.

In this way, related processing logic of the foregoing sub-operation set is triggered by identifying the first key field, which has simpler logic than another triggering manner, and can improve processing efficiency.

In a possible implementation, after the trained AI model is obtained, an execution function for the AI model is further generated, where the execution function is for calling the AI model.

In this way, a database server can perform an AI operation more easily by calling the execution function to call the AI model.

In a possible implementation, a mapping relationship between the column in the data table and the AI model is recorded.

The database server maintains a mapping table of table name-column name-function name that is for recording a correspondence between an execution function created based on the column adding instruction of an extended syntax, the data table, and the column.

In this way, the AI model corresponding to the table operation instruction can be quickly determined by using the mapping table, thereby improving operation efficiency of a related operation on the AI model. In addition, execution of a more complex sub-operation set may be triggered by using a simple column adding instruction, thereby improving operation efficiency.

In a possible implementation, the column is added to the data table based on the first table operation instruction.

Based on the foregoing column adding instruction of the extended syntax, a corresponding column adding instruction of a general syntax is generated, to add the column to the data table.

In this way, execution of a more complex sub-operation set may be triggered by using a simple column adding instruction, thereby improving operation efficiency.

In a possible implementation, when a call instruction for the execution function for the AI model is received, corresponding processing may include: inputting an inference condition parameter in the call instruction to the AI model to obtain a first inference result, and feeding back the first inference result as a response to the call instruction.

In this way, function calling can be directly performed to simplify instruction processing logic and improve efficiency of an AI model inference process.

In a possible implementation, when a first field query instruction for the data table is received, corresponding processing may include: determining, based on the foregoing mapping relationship between the column and the AI model, that the AI model needs to be used, inputting a query condition parameter in the first field query instruction to the AI model to obtain a second inference result, and feeding back the second inference result as a response to the first field query instruction.

If a row of data in the data table includes the query condition parameter, a field corresponding to the foregoing column name in the row may be further determined. The field may be considered as a query target field in the foregoing field query instruction, and an inference result may be added to the query target field.

If any row of data in the data table does not include the query condition parameter, a new row may be created and the query condition parameter is added to the row. Each query condition parameter includes a condition column name and a condition value. A field corresponding to a condition column name in the row may be determined and a corresponding condition value may be added to the field. In addition, a field that is in the row and that corresponds to a column name of the predict column may be determined. The field may be considered as a query target field in the foregoing field query instruction, and an inference result may be added to the query target field.

In this way, automatic execution of a series of complex operations including at least one AI operation and at least one data processing operation may be triggered by using the field query instruction. The user only needs to input a simple field query instruction, and does not need to input a series of complex operation instructions, thereby improving operation efficiency.

In a possible implementation, after the inference result of the AI model is obtained, the inference result of the AI model is recorded into the foregoing predict column.

In this way, execution of a more complex sub-operation set may be triggered by using a simple field query instruction, thereby improving operation efficiency.

In a possible implementation, when a second field query instruction for the column in the data table is received, corresponding processing may include: determining a target inference result from the column based on a query condition parameter in the second field query instruction, and feeding back the target inference result as a query result of the second field query instruction.

In this way, if AI model inference has been performed based on the first field query instruction, and an inference result is filled in the data table, when the second field query instruction that has a same query condition parameter as the first field query instruction is subsequently executed, the AI model inference does not need to be performed again, and data query can be simply performed. This can improve processing efficiency.

In a possible implementation, when a second table operation instruction is received, the AI model and/or the execution function for the AI model are/is deleted based on the mapping relationship between the column and the AI model. The second table operation instruction is for deleting the column in the data table.

The second table operation instruction may be a column deleting instruction of an extended syntax. The first key field may be included.

In this way, the user only needs to input a simple column deleting instruction, to perform a complex query and deleting operation, thereby improving operation efficiency.

In a possible implementation, the model creation request further indicates the AI server to obtain the data from a third-party storage service. Processing of providing the data in the data table for the AI server may include: storing the data into the third-party storage service.

The third-party storage service may be an object storage service (object storage service, OBS) or a dataset (dataset).

In addition, in addition to transmitting data by using the third-party storage server, corresponding data may also be directly transmitted.

In this way, data transmission reliability can be improved.

In a possible implementation, before the first table operation instruction is received, table creation processing may be performed, including: receiving a table creation instruction, where the table creation instruction is for creating the data table, and a second key field corresponding to a target column is added to the table creation instruction; creating the data table, and determining indication information based on the second key field, where the indication information indicates that the target column in the data table is for storing training calibration data; and after the corresponding sub-operation set is determined, further providing the indication information for the AI server.

In this way, the training calibration data can be specified more flexibly.

According to a second aspect, an apparatus for executing a database operation instruction is provided. The apparatus includes at least one module, and the at least one module is configured to implement the method according to the first aspect and the possible implementations of the first aspect.

According to a third aspect, a computing device cluster is provided, including at least one computing device. Each computing device includes a processor and a memory. The processor of the at least one computing device is configured to execute instructions stored in the memory of the at least one computing device, to enable the computing device cluster to perform the method according to the first aspect and the possible implementations of the first aspect.

According to a fourth aspect, a computer-readable storage medium is provided. The computer-readable storage medium includes computer program instructions. When the computer program instructions are executed by a computing device cluster, the computing device cluster performs the method according to the first aspect and the possible implementations of the first aspect.

According to a fifth aspect, a computer program product including instructions is provided. When the instructions are run by a computing device cluster, the computing device cluster is caused to perform the method according to the first aspect and the possible implementations of the first aspect.

### BRIEF DESCRIPTION OF DRAWINGS

FIG. 1 is a diagram of a structure of a data system according to an embodiment of this disclosure;
FIG. 2 is a flowchart of a method for executing a database operation instruction according to an embodiment of this disclosure;
FIG. 3 is a flowchart of a method for executing a column adding instruction according to an embodiment of this disclosure;
FIG. 4 is a flowchart of a method for executing a column deleting instruction according to an embodiment of this disclosure;
FIG. 5 is a flowchart of a method for executing a field query instruction according to an embodiment of this disclosure;
FIG. 6 is a flowchart of a method for a call instruction for an execution function according to an embodiment of this disclosure;
FIG. 7 is a flowchart of a method for executing a table creation instruction according to an embodiment of this disclosure;
FIG. 8 is a diagram of a structure of an apparatus for executing a database operation instruction according to an embodiment of this disclosure;
FIG. 9 is a diagram of a computing device according to an embodiment of this disclosure;
FIG. 10 is a diagram of a computing device cluster according to an embodiment of this disclosure; and
FIG. 11 is a diagram of a computing device cluster according to an embodiment of this disclosure.

### DESCRIPTION OF EMBODIMENTS

To make the objectives, technical solutions, and advantages of this disclosure clearer, the following further describes the implementations of this disclosure in detail with reference to the accompanying drawings.

The following explains concepts in this disclosure.

### Database

A database is a data set with a specified data structure. Data in the database is generally stored in a two-dimensional table form.

### Table operation instruction

A table operation instruction is an instruction for performing a table operation in a database. The table operation may be creating a table, adding a column, deleting a column, adding data, deleting data, querying data, or the like. A structured query language (Structured Query Language, SQL) statement, that is, a SQL statement, is a database query and program design language for accessing data and querying, updating, and managing a database.

### AI Operation

An AI operation is an operation related to machine learning, for example, creating an AI model (obtaining, through training, an AI model that can be used for inference), performing inference, and deleting an AI model.

### Training calibration data

Training calibration data is data used as a reference value (also referred to as a truth value) of output data in an AI model training process, and generally is manually calibrated or automatically calibrated by using an algorithm. For example, for an AI model for identifying an object type in an image, if there is a vehicle in a sample image, corresponding training calibration data may be a number representing a "vehicle type".

### AI model metadata

Metadata is data for describing data, and may be considered as attribute information of data. AI model metadata is attribute information of an AI model, for example, a model algorithm type of the AI model.

### Asynchronous mode and synchronous mode

In an asynchronous mode, a plurality of clients run on a user terminal. The plurality of clients may separately send an operation instruction to a database server. The database server may process operation instructions in parallel. For example, the database server may execute processes of creating a plurality of AI models in parallel. For a processing process of each operation instruction, refer to a processing procedure of a method for executing a database operation instruction provided in embodiments of this disclosure. The user terminal may display an execution status of each operation instruction, for example, AI model training in progress or AI model creation completed.

In a synchronous mode, one client runs on a user terminal. One or more operation instructions may be sent to a database server through the client. When the plurality of operation instructions are sent, the database server serially processes the plurality of operation instructions in sequence. For a processing process of each operation instruction, refer to a processing procedure of a method for executing a database operation instruction provided in embodiments of this disclosure. The user terminal may display a completed state for an operation instruction that is executed completely, and the user terminal may display a blocked state for an operation instruction that is not executed completely.

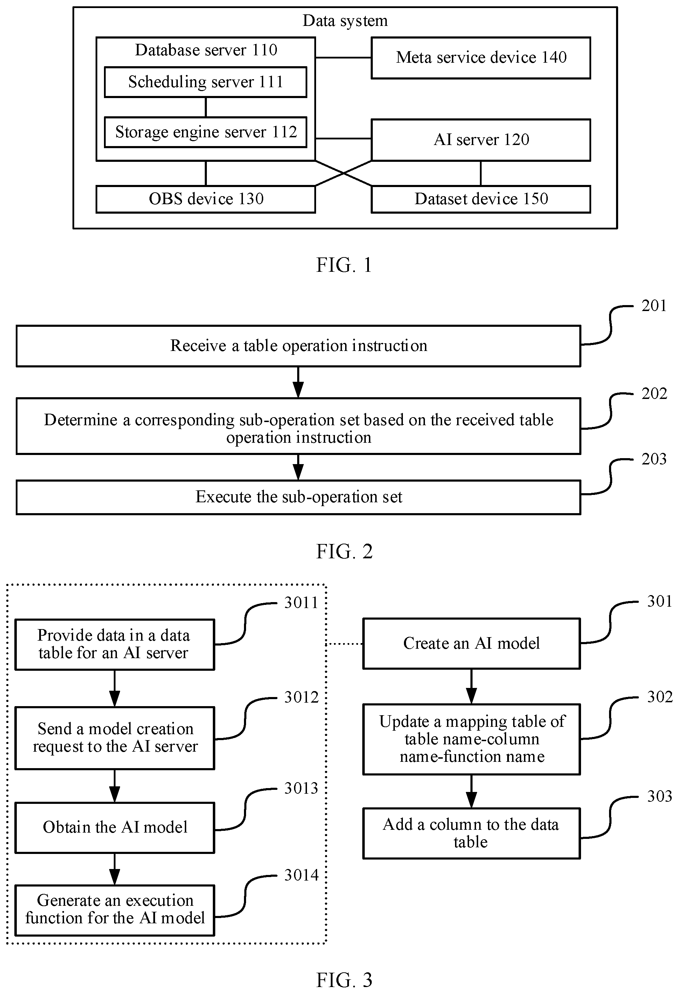

Embodiments of this disclosure provide a method for executing a database operation instruction. The method may be applied to a data system including both a database server (or referred to as a database system) 110 and an AI server (or referred to as an AI system) 120. A structure of the data system is shown in FIG. 1. The data system may further include an OBS device 130, a metadata service (meta service) device 140, a dataset device 150, and the like. The following separately describes the components of the data system.

The database server 110 may be a server cluster or may be an independent device. The database server is generally configured to store massive data, and is configured to process a database operation instruction sent by user equipment. As the server cluster, the database server may further include a scheduling server 111 and a storage engine server 112.

The scheduling server 111 may be responsible for instruction parsing, task assignment, task monitoring, execution control, and the like. In addition, the scheduling server can easily implement operations such as executing, re-executing, and terminating tasks, and can conveniently view an execution log, and monitor and manage task execution in a timely manner.

The storage engine server is an underlying component of a database and is a core of the database. Main processing of the storage engine server may include creating, querying, updating, and deleting a data table.

The AI server 120 may also be referred to as an AI engine server. The AI engine server is a framework that can support a user in machine learning and deep learning model training job development, such as TensorFlow and MXNet. The AI engine server can be used for various AI operations, such as creating an AI model.

The OBS device 130 is a third-party storage device, and can provide large-capacity, secure, highly reliable, and low-cost data storage. During usage, there is no need to consider a capacity limit, and a plurality of storage types are provided to select, to meet requirements of the user for various service scenarios.

The meta service device 140 is mainly configured to store metadata. In embodiments of this disclosure, the meta service device 140 may be configured to store metadata of an AI model.

The dataset device 150 is also a third-party storage device, and is generally configured to establish a small database.

During database application, the user expects to use a simple database operation instruction to trigger execution of some complex combined operations, especially a combined operation including AI operations, to improve operation efficiency and reduce a threshold for using an AI function. Therefore, an embodiment of this disclosure provides a method for executing a database operation instruction. As shown in FIG. 2, the method includes the following steps.

201: Receive a table operation instruction.

The table operation instruction may be a table operation instruction that conforms to a general SQL syntax rule. Alternatively, the table operation instruction may be a table operation instruction of an extended syntax. An extension manner is as follows. Manner 1: The table operation instruction may be a table operation instruction obtained by adding a first key field to a table operation instruction that conforms to a general SQL syntax rule, where the first key field may be added to a specified location of the table operation instruction. Manner 2: The table operation instruction may be a table operation instruction obtained by replacing, with a first key field, a specified field in a table operation instruction that conforms to a general SQL syntax rule.

In this embodiment of this disclosure, an example in which the table operation instruction is mainly a column adding instruction, a column deleting instruction, and a field query instruction is used. Processing in other cases is similar, and details are not described again. The following provides several examples of the table operation instruction. The column adding instruction is a column adding instruction of an extended syntax, and a form of the column adding instruction is a table operation instruction obtained by adding the first key field to a specified location of a column adding instruction of a general syntax. The column deleting instruction is a column deleting instruction of an extended syntax, and a form of the column deleting instruction is a table operation instruction obtained by adding the first key field to a specified location of a column deleting instruction of a general syntax. The field query instruction is a field query instruction of a general syntax. The first key field may be set to any field that is not used in the database operation instruction. In this embodiment of this disclosure, an example in which the first key field is PREDICT is used to describe the solution in detail. Other cases are similar, and details are not described again. A specific form is as follows.

Column adding instruction: ALTER TABLE table_name ADD PREDICT column_name datatype

ALTER TABLE table_name ADD column_name datatype is a table operation instruction of a general syntax, the first key field PREDICT is added to the instruction, and the first key field is placed after ADD, to obtain a column adding instruction of an extended syntax. table_name is a table name of a data table to which column adding is performed, column_name is a column name of a column newly added, and datatype is a format requirement for data in the column newly added. For example, if datatype is char(20), it indicates that each piece of data in the column is data in a character format and a maximum length of a character string of the data is 20.

Column deleting instruction: ALTER TABLE table_name DROP PREDICT COLUMN column_name

ALTER TABLE table_name DROP COLUMN column_name is a table operation instruction of a general syntax. The first key field PREDICT is added to the instruction, and the first key field is placed after DROP, to obtain a column deleting instruction of an extended syntax. table_name is a table name of a data table from which column deleting is performed, and column_name is a column name of a deleted column.

Field query instruction: SELECT column_name FROM table_name AS SELECT...

A form of the field query instruction is a table operation instruction of a general syntax. table_name is a table name of a data table on which field query is performed, and column_name is a column name corresponding to a queried field. A field after AS SELECT is a query condition parameter, which may include one or more query condition parameters. Each query condition parameter includes a condition column name and a condition value.

202: Determine a corresponding sub-operation set based on the received table operation instruction.

The sub-operation set may include at least one AI operation. In addition to the AI operation, the sub-operation set further includes at least one data processing operation, for example, adding or deleting a column in a table, or updating a mapping table.

A database server may store a correspondence between the table operation instruction and the sub-operation set. In the correspondence, different table operation instructions may correspond to different sub-operation sets. Sub-operation sets corresponding to various table operation instructions are described in detail in the following content.

After the database server receives the table operation instruction, for the table operation instruction of an extended syntax, the first key field may be identified in the table operation instruction, to trigger obtaining of a corresponding sub-operation set. For this case, detailed descriptions are provided in the following content with reference to execution processes of the column adding instruction and the column deleting instruction. For the table operation instruction of a general syntax, determining may be performed based on a piece of parameter information in the table operation instruction, to trigger obtaining of a corresponding sub-operation set. For this case, detailed descriptions are provided in the following content with reference to an execution process of the field query instruction.

203: Execute the sub-operation set.

Different sub-operations may be executed by different entities. Some sub-operations are performed in the database server, and some sub-operations are performed in an AI server. A scheduling server in the database server may allocate different sub-operations to corresponding execution devices. Then a corresponding device performs the allocated sub-operation. If a sub-operation fails during the execution of the sub-operation set, the sub-operation set or the sub-operation may be re-executed according to a setting.

According to the foregoing method, automatic execution of a series of complex operations including at least one AI operation and at least one data processing operation may be triggered by using the table operation instruction. A user only needs to input a simple table operation instruction, and does not need to input a series of complex operation instructions, thereby improving operation efficiency.

There are a plurality of possible cases for the foregoing table operation instruction, corresponding sub-operation sets are different, and AI operations in the sub-operation sets are also different. The following describes several cases in detail.
(1) Case 1: The table operation instruction is a column adding instruction, and the AI operation includes creating an AI model.

After receiving the table operation instruction, a process in which the scheduling server parses the table operation instruction may be as follows.

When parsing the instruction, the scheduling server first reads an instruction name in the table operation instruction, and when reading an ALTER TABLE field and an ADD field, the scheduling server may determine that the instruction is a column operation instruction, and then further determines whether PREDICT exists after the field ADD. If PREDICT exists, it is determined that the instruction is a column adding instruction of an extended syntax.

In the scheduling server, different sub-operation sets are set for different table operation instructions of an extended syntax. A sub-operation set corresponding to the column adding instruction of an extended syntax may include sub-operations such as creating the AI model, updating a mapping table, and adding a column. An execution process of the sub-operation set may be shown in FIG. 3, and includes the following steps.

301: Create the AI model.

The scheduling server may generate an AI model creation instruction based on the foregoing column adding instruction of an extended syntax. A form of the AI model creation instruction may be as follows.

CREAT MODEL model_name WITH( ) AS SELECT * FROM table_name

In the instruction, CREAT MODEL is an instruction name, WITH() is for introducing a related attribute parameter of the AI model, and AS SELECT * FROM is for introducing a data source for training the AI model. Characters of the three fields are fixed and may be referred to as fixed fields.

model_name, a field in the bracket after WITH, and table_name are parameter fields. Content of the parameter fields may be obtained from the column operation instruction, or may be preset.

model_name is a name of an AI model that needs to be created. The name may be set in a plurality of methods. For example, the name may be set by using a sequence number or a character string plus a sequence number, or a combination of a table name and a column name that are in the column operation instruction.

The field in the bracket after WITH is the attribute parameter of the AI model, for example, a training mode and a model algorithm type. The attribute parameter may be preset, for example, the training mode is preset to an asynchronous mode or a synchronous mode. The attribute parameter may alternatively be obtained from the column adding instruction. For example, the column adding instruction has a parameter field carrying a model algorithm type of a convolutional neural network. The attribute parameter may alternatively be determined by using some automatic machine learning technologies. For example, a model algorithm type is automatically determined based on a data type in a data table. The used automatic machine learning technology may be automated machine learning (automated machine learning, AutoML), or may be smart machine learning (smart machine learning, SmartML).

table_name is a table name of a data table in which data for training the AI model is located. table_name may be obtained from table_name in the column adding instruction.

After the AI model creation instruction is generated, the AI model creation instruction may be further parsed to obtain a series of sub-operations. A specific sub-operation execution process may be as follows.

3011: Provide the data in the data table for the AI server.

A form of the data table is a two-dimensional table form. In this embodiment of this disclosure, an example of the following data table is used to describe the solution in detail.

A table name of the data table is iris (iris). The data table has five columns: a sepal length (sepal_length), a sepal width (sepal_width), a petal length (petal_length), a petal width (petal_width), and a type (output_label). Data corresponding to output_label is training calibration data.

A form of the data table is shown in Table 1.

**Table 1**

| Sepal length sepal_length | Sepal width sepal_width | Petal length petal_length | Petal width petal_width | Type output_label |
|---|---|---|---|---|
| 5.0 | 2.9 | 1.0 | 0.20 | 2 |
| 5.1 | 2.7 | 0.9 | 0.18 | 1 |
| 4.8 | 2.7 | 1.1 | 0.21 | 2 |
| ... | ... | ... | ... | ... |

The scheduling server may notify a storage engine server to directly send the data in the data table to the AI server. For example, this processing manner may be used when an amount of data in the data table is small. Alternatively, the scheduling server may first store the data in the data table into a third-party storage device, and then notify the AI server to obtain corresponding data from the third-party storage device. For example, this processing manner may be used when an amount of data in the data table is large. The following describes a processing manner in which the third-party storage device is used.

The scheduling server may indicate the storage engine server to create an external table on the third-party storage device, and add the data in the data table to the external table. The third-party storage device may be an OBS device, a dataset device, or the like. A name of the external table may be set by adding an external field to a table name in the column adding instruction, or another setting method can be used. A data structure of the external table may be the same as a data structure of the data table in the column adding instruction. The storage engine server may add all data in the data table to the external table, or may select data in some columns based on an automatic machine learning technology and add the data to the external table.

Indication information may be preset for the data table, to indicate, in the data table, a target column as the training calibration data. The indication information may be set by using a table creation instruction when the data table is created (which is described in detail in the following content), or may be preset uniformly (for example, a 1^{st} column is set as the training calibration data uniformly). When the external table is created, the indication information is also set for the external table.

An instruction for creating the external table may be CREAT EXTERNAL TEMP TABLE external table_name.

external_table_name is a table name of the created external table. For example, the table name of the external table is iris_external.

An instruction for filling the data in the data table into the external table is INSERT INTO external_table_name SELECT * FROM table_name.

table_name is the table name of the data table, for example, the table name may be iris.

3012: Send a model creation request to the AI server.

The scheduling server sends the model creation request to the AI server. The model creation request may carry the attribute parameter of the AI model (which may be obtained from the foregoing CREAT MODEL instruction), and may further carry storage location information of the foregoing external table, such as an address of the third-party storage device, a storage path, and the name of the external table.

The AI server may obtain data in the external table from the third-party storage device based on the storage location information of the external table, may obtain the foregoing indication information as well, and may determine, based on the indication information, which column of data in the external table is the training calibration data, to further determine that data other than the training calibration data in the external table is sample input data. Further, the AI server may create an initial AI model (that is, an AI model that is not trained and whose parameter is not adjusted, where all model mathematical parameters are initial values) that meets the foregoing attribute information, and then train the initial AI model based on the sample input data and the training calibration data. In a training process, the storage engine server may periodically send a status query request to the AI server, and the AI server may feed back a training status to the storage engine server, for example, training in progress or training completed.

After completing training, the AI server may send a model file of the trained AI model to a third-party storage device. The model file may include the model algorithm type, a model mathematical parameter (a value after training), feature data (for example, accuracy of the AI model), and the like. The third-party storage device may be pre-specified by the storage engine server, and may be an OBS device or may be a dataset device. The third-party storage device may be the same as or different from the third-party storage device that stores the external table.

After finding that a current training status is training completed, the storage engine server may obtain, from the AI server, storage location information of the model file, for example, an address, a storage path, and a file name of the third-party storage device.

3013: Obtain the AI model.

The storage engine server obtains the model file of the AI model from the third-party storage device based on the storage location information. In addition, optionally, the AI server may alternatively directly send the model file to the storage engine server.

Then, the storage engine server stores the model file into a third-party storage device bound to the storage engine server (where the foregoing third-party storage device temporarily stores the model file, and the third-party storage device herein stores the model file for a long time until the AI model is deleted), and generates metadata of the AI model based on the current storage location information. The metadata may further include other attribute information of the AI model, such as a name and accuracy. The storage engine server may store the metadata, or the storage engine server sends the metadata to the scheduling server, and the scheduling server sends the metadata to a meta service device for storage.

In the foregoing processing, the storage engine server queries the training status, obtains the model file, stores the model file, generates the metadata, stores the metadata, and the like. Some or all of the processing may alternatively be performed by the scheduling server.

3014: Generate an execution function for the AI model.

The scheduling server may generate the execution function for the AI model based on the model algorithm type and the model mathematical parameter, and store the execution function in the storage engine server.

302: Update a mapping table of table name-column name-function name.

The scheduling server may maintain the mapping table of table name-column name-function name that is for recording a correspondence between an execution function created based on the column adding instruction of an extended syntax, the data table, and the column. After the execution function for the AI model is generated, the table name and the column name that are in the column adding instruction, and the function name of the execution function may be added to the mapping table correspondingly. When the execution function is subsequently called to perform AI model inference or AI model deleting, the mapping table may be used for related query.

303: Add a column to the data table.

The scheduling server may generate, based on the foregoing column adding instruction of an extended syntax, a corresponding column adding instruction of a general syntax. For example, corresponding processing may be removing the first key field from the column adding instruction of an extended syntax. The generated instruction may be as follows.

ALTER TABLE table_name ADD column_name datatype

Further, the column adding instruction of a general syntax may be executed to add a column to a corresponding data table.

For example, a predict column predict1 is added to the data table shown in the foregoing Table 1, and an obtained data table is shown in Table 2. The corresponding instruction is as follows.

ALTER TABLE iris ADD predict1 char(20)

**Table 2**

| Sepal length sepal_length | Sepal width sepal_width | Petal length petal_length | Petal width petal_width | Type output_label | Predict predict1 |
|---|---|---|---|---|---|
| 5.0 | 2.9 | 1.0 | 0.20 | 2 | |
| 5.1 | 2.7 | 0.9 | 0.18 | 1 | |
| 4.8 | 2.7 | 1.1 | 0.21 | 2 | |
| ... | ... | ... | ... | ... | |

In some application scenarios, the foregoing step 302 and/or step 303 may alternatively not be performed. For example, a function name generation rule is set to be obtained by combining a table name and a column name that correspond to the column adding instruction, and a similar function name generation rule is also used in processing such as AI model inference and AI model deleting. In this case, step 302 may not be performed. For another example, if an inference result does not need to be recorded into the data table during AI model-based inference in an application scenario, processing in step 303 may not be performed. In addition, there is no necessary time sequence relationship between step 303 and steps 301 and 302. Step 303 may be performed first, or may be performed later, or may be performed at any time in processes of steps 301 and 302.

In this embodiment of this disclosure, AI model retraining may be further performed in the foregoing similar processing manner. After the data in the data table changes to some extent (for example, a large amount of data is newly added), the user may re-input a similar column adding instruction of an extended syntax, to trigger AI model retraining. A processing process of retraining is similar to the foregoing processing process. For details, refer to the foregoing related content. The current input column adding instruction of an extended syntax is referred to as a first column adding instruction, and the input column adding instruction of an extended syntax in the foregoing procedure is referred to as a second column adding instruction.

A first table name in the first column adding instruction is the same as a second table name in the second column adding instruction. A first column name in the first column adding instruction may be the same as or different from a second column name in the second column adding instruction. When the first column name is different from the second column name, a first AI model and a second AI model are respectively created in processes of executing the first column adding instruction and the second column adding instruction. The first AI model and the second AI model may be considered as different versions of a same AI model, and the first AI model and the second AI model correspond to different columns in a same data table. When the first column name is the same as the second column name, after the second column adding instruction is executed to generate the second AI model, the first AI model may be replaced with the second AI model.

The AI model retraining may be triggered by manually inputting an instruction by the user, or may be automatically triggered. The database server may monitor the data in the foregoing data table. When detecting that the data in the data table meets a specified change condition, the database server performs retraining based on current data in the data table to obtain the AI model. The change condition may be that changed (newly added or modified) data exceeds a specified quantity of pieces or a specified proportion, or may be that a change value of distribution information of data in one or more columns exceeds a specified threshold, where the distribution information may be existence proportions of various values.

(2) Case 2: The table operation instruction is a column deleting instruction, and the AI operation includes determining an AI model based on a table name and a column name that are in the column deleting instruction.

After receiving the table operation instruction, a process in which the scheduling server parses the table operation instruction may be as follows.

When parsing the instruction, the scheduling server first reads an instruction name in the table operation instruction, and when reading an ALTER TABLE field, a DROP field, and a COLUMN field, the scheduling server may determine that the instruction is the column deleting instruction, and then further determines whether PREDICT exists after the field DROP. If PREDICT exists, it is determined that the instruction is a column deleting instruction of an extended syntax.

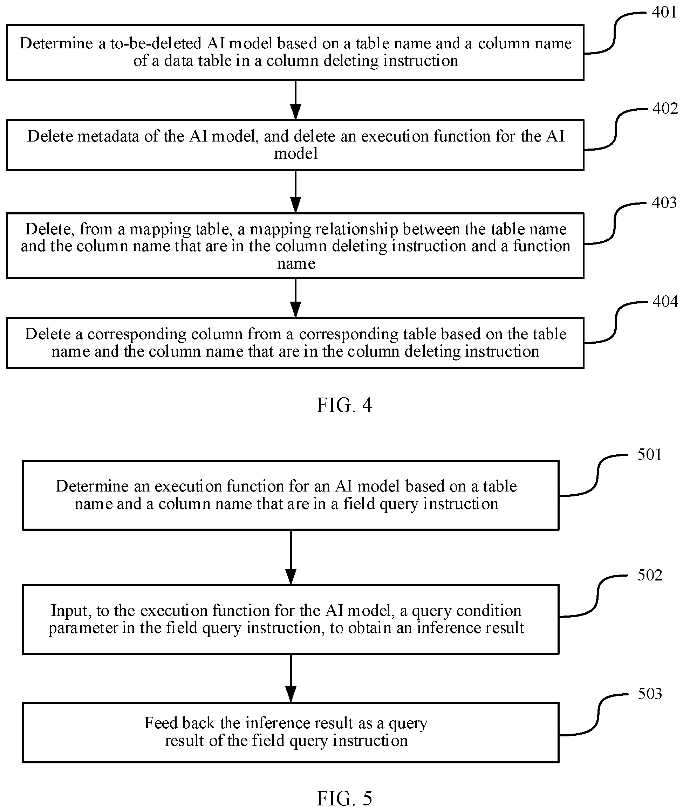

In the scheduling server, different sub-operation sets are set for different table operation instructions of an extended syntax. A sub-operation set corresponding to the column deleting instruction of an extended syntax may include sub-operations such as determining the AI model and deleting the AI model. An execution process of the sub-operation set may be shown in FIG. 4, and includes the following steps.

401: Determine a to-be-deleted AI model based on a table name and a column name of a data table in the column deleting instruction.

Manner 1: The scheduling server stores a mapping table of table name-column name-function name. The scheduling server may obtain the table name and the column name of the data table in the column deleting instruction, and then search for a function name corresponding to the table name and the column name that are in the mapping table, that is, a function name of an execution function for the AI model, which may also be considered as a name of the AI model.

Manner 2: When the AI model is created, if a name of the AI model is a combination of the table name and the column name of the data table, the name of the AI model may be directly obtained by combining the table name and the column name of the data table in the column deleting instruction.

402: Delete metadata of the AI model, and delete the execution function for the AI model.

The scheduling server may send, to a meta service device, a metadata deleting message carrying the name of the AI model, and the meta service device deletes metadata corresponding to the name of the AI model. The scheduling server may send, to the storage engine server, an execution function message carrying the name of the AI model, and the storage engine server deletes the execution function corresponding to the name of the AI model.

403: Delete, from the mapping table, a mapping relationship between the table name and the column name that are in the column deleting instruction and the function name.

The scheduling server may delete, from the foregoing mapping table, corresponding items of the table name, the column name, and the function name that are found in step 401.

404: Delete a corresponding column from a corresponding table based on the table name and the column name that are in the column deleting instruction.

The scheduling server may generate, based on the foregoing column deleting instruction of an extended syntax, a corresponding column deleting instruction of a general syntax. For example, corresponding processing may be removing the first key field from the column deleting instruction of an extended syntax. The generated instruction may be as follows.

ALTER TABLE table_name DROP COLUMN column_name

Further, the column deleting instruction of a general syntax may be executed to delete the column from the corresponding data table.

For example, a predict column predict1 is deleted from the data table shown in Table 2, and an obtained data table is shown in Table 1. The corresponding instruction is as follows.

ALTER TABLE iris DROP COLUMN predict1

In some application scenarios, the foregoing step 403 and/or step 404 may alternatively not be performed. For example, in the case of the foregoing Manner 2, a data system does not have the foregoing mapping table. In this case, step 403 may not be performed. For another example, when the AI model is created, no column is added to the foregoing data table. In this case, step 404 may not be performed. In addition, there is no necessary time sequence relationship between steps 402, 403, and 404, and any step may be performed first or later.

(3) Case 3: The table operation instruction is a field query instruction, and the AI operation includes performing AI model inference.

After receiving the table operation instruction, a process in which the scheduling server parses the table operation instruction may be as follows.

When parsing the instruction, the scheduling server first reads an instruction name in the table operation instruction, and when reading a field SELECT, a field FROM, and an AS SELECT field, the scheduling server may determine that the instruction is the field query instruction. The field query instruction is an instruction for querying data in the data table, and a form may be: SELECT predict1 FROM iris AS SELECT.... Then, the scheduling server further determines whether a mapping table of table name-column name-function name stored in the scheduling server includes a mapping relationship between a table name and a column name that are in the instruction and a function name. If the mapping relationship exists, the scheduling server determines a sub-operation set corresponding to the field query instruction, and executes the sub-operation set. An execution process of the sub-operation set may be shown in FIG. 5, and includes the following steps.

501: Determine an execution function for the AI model based on the table name and the column name that are in the field query instruction.

Manner 1: The scheduling server stores the mapping table of table name-column name-function name. The scheduling server may obtain a table name and a column name of the data table in the field query instruction, and then search for a function name corresponding to the table name and the column name that are in the mapping table, that is, a function name of the execution function for the AI model.

Manner 2: When the AI model is created, if a name of the AI model is a combination of a table name and a column name of the data table, the name of the AI model may be directly obtained by combining the table name and the column name of the data table in the field query instruction, that is, a function name of the execution function for the AI model.

502: Input, to the execution function for the AI model, a query condition parameter in the field query instruction, to obtain an inference result.

The scheduling server may obtain the query condition parameter from the field query instruction. Then, the query condition parameter is set as function input data. Further, an inference notification is sent to the storage engine server, where the inference notification carries the function name of the execution function for the AI model and the function input data. In addition, the inference notification may further carry the foregoing table name and column name.

The storage engine server calls the execution function for the AI model based on the function name, and inputs the function input data in the execution function to obtain the inference result. The function input data is the query condition parameter, and the query condition parameter includes a condition column name and a condition value. The condition column name is a parameter name of the execution function, and the condition value is a corresponding parameter value.

The storage engine server may determine the corresponding data table based on the table name, query the function input data (that is, the query condition parameter) in the data table, and perform different processing based on different query results.

Case 1: If a row of data in the data table includes the function input data, a field corresponding to the foregoing column name in the row may be further determined. The field may be considered as a query target field in the foregoing field query instruction, and an inference result may be added to the query target field.

For example, query condition parameters are sepal_length 4.5, sepal_width 3.1, petal_length 1.1, and petal_width 0.20. A row of data exists in the data table corresponding to Table 2, where a field value corresponding to a sepal_length column is 4.5, a field value corresponding to a sepal_width column is 3.1, a field value corresponding to a petal_length column is 1.1, a field value corresponding to a petal_width column is 0.20, an output_label column is empty, and a predict1 column is empty. When the field query instruction is executed, an inference result 2 (a type number) is filled in a field (a query result field) that is in the row corresponding to the predict1 column, as shown in Table 3.

**Table 3**

| Sepal length sepal_length | Sepal width sepal_width | Petal length petal_length | Petal width petal_width | Type output_label | Predict predict 1 |
|---|---|---|---|---|---|
| ... | ... | ... | ... | ... | |
| 4.5 | 3.1 | 1.1 | 0.20 | | 2 |
| ... | ... | ... | ... | ... | |

Case 2: If any row of data in the data table does not include the function input data, a new row may be created, and the function input data (that is, the query condition parameter) is added to the row. As mentioned above, each query condition parameter includes a condition column name and a condition value. A field corresponding to a condition column name in the row may be determined and a corresponding condition value may be added to the field. In addition, a field corresponding to the foregoing column name in the row may be determined. The field may be considered as a query target field in the foregoing field query instruction, and an inference result may be added to the query target field.

For example, query condition parameters are sepal_length 4.5, sepal_width 3.1, petal_length 1.1, and petal_width 0.20. Any row of data in the data table corresponding to Table 2 does not include the query condition parameters. A new row may be created for filling with the query condition parameters, and an inference result 2 (a type number) is filled in a field (that is, a query result field) corresponding to a predict1 column, as shown in Table 4.

**Table 4**

| Sepal length sepal_length | Sepal width sepal_width | Petal length petal_length | Petal width petal_width | Type output_label | Predict predict1 |
|---|---|---|---|---|---|
| ... | ... | ... | ... | ... | |
| 4.5 | 3.1 | 1.1 | 0.20 | | 2 |

503: Feed back the inference result as a query result of the field query instruction.

The storage engine server feeds back the inference result to the user.

In this embodiment of this disclosure, considering that the inference result is filled in the data table when the field query instruction is executed, it is also possible that the query condition parameter is used for filling, optionally, when the field query instruction is received, after it is determined that an entry in the mapping table of table name-column name-function name includes the table name and the column name that are in the instruction, it may be determined whether a row that meets the query condition parameter exists in the data table with the table name. If the row exists, it is further determined whether the field (that is, the query result field) corresponding to the column name in the row is empty. If the field is empty, processing may be performed based on the foregoing procedure. If the field is not empty, data of the field may be directly read and fed back as the query result. According to the processing manner, after the field query instruction is executed based on the foregoing procedure, if a same field query instruction is re-executed, AI model inference is not triggered, and only simple data query is performed.

In addition to triggering the AI model inference by using the field query instruction, the AI model inference may alternatively be triggered by directly using a call instruction for the execution function.

A form of the call instruction is SELECT func_name inference condition parameter.

func_name is a function name of the execution function for the AI model. The inference condition parameter is similar to the query condition parameter described above. For example, if the function name of the execution function is iris_predice1, inference condition parameters are sepal_length 4.5, sepal_width 3.1, petal_length 1.1, and petal_width 0.20.

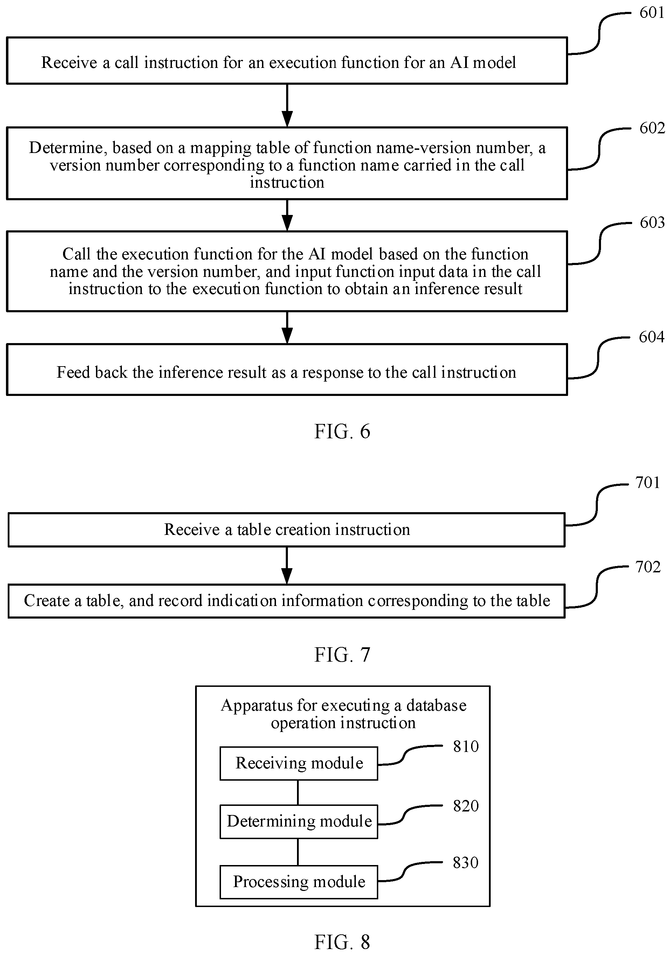

In this embodiment of this disclosure, AI model retraining may be performed. Therefore, a plurality of different versions of a same AI model may exist. If the different versions of the same AI model have different function names, the function name may be directly used to call a corresponding execution function and the execution function is used for inference. If the different versions of the same AI model have a same function name and are configured with different version numbers, a processing procedure shown in FIG. 6 may be used, and includes the following steps.

601: Receive a call instruction for an execution function for an AI model.

The call instruction may carry a function name of the execution function and function input data.

602: Determine, based on a mapping table of function name-version number, a version number corresponding to the function name carried in the call instruction.

The scheduling server stores the mapping table of function name-version number, for storing a version number of an execution function of a latest version for the AI model. After receiving the call instruction, the scheduling server queries the latest version number for the AI model by using the mapping table of function name-version number.

603: Call the execution function for the AI model based on the function name and the version number, and input the function input data in the call instruction to the execution function to obtain an inference result.

604: Feed back the inference result as a response to the call instruction.

Each time the AI model retraining is performed, a version number of an execution function obtained through retraining may be obtained. In the mapping table of function name-version number, the version number corresponding to the function name of the execution function is replaced with the currently obtained version number.

An embodiment of this disclosure further provides a method for creating a data table. In the method, a target column is set as training calibration data for use in an AI model training process. A processing procedure of the method is shown in FIG. 7, and may include the following steps.

701: Receive a table creation instruction.

A statement corresponding to the target column in the table creation instruction may include a second key field. The field indicates that data in the target column is the training calibration data. Character content of the field may be preset randomly. A form of the table creation instruction may be:

```
CREATE TABLE table_name
          (
          column_name1 datatype,
          column_name2 datatype,
          column _name3 datatype,
          column_name4 datatype,
          column_name5 datatype PREDICT KEY
          )
          ....
```

Only a part of content of the instruction is shown, and content of the part of "..." is not described herein. CREATE TABLE is an instruction name. table_name is a table name of the data table. column_name1, column_name2, column_name3, column_name4, and column _name5 are five column names of the data table. datatype is a data format corresponding to a column. PREDICT KEY is the second key field. PREDICT KEY is in a 5^{th} column. Therefore, the 5^{th} column is set as the training calibration data.

An example in which a data table corresponding to Table 1 is created is used as an example. The table creation instruction may be:

```
CREATE TABLE iris
          (
          sepal_length float4,
          sepal_width float4,
          petal_length float4,
          petal_width float4,
          output_label char(20) PREDICT KEY
          )
          ....
```

PREDICT KEY indicates that data corresponding to an output_label column is the training calibration data.

702: Create the table, and record indication information corresponding to the table.

The indication information indicates that the data in the target column is the training calibration data, and the indication information is used in a subsequent training process.

Based on a same technical concept, an embodiment of this disclosure provides an apparatus for executing a database operation instruction. The apparatus may be used in the foregoing database system. As shown in FIG. 8, the apparatus includes:
a receiving module 810, configured to receive a first table operation instruction, where the first table operation instruction is for adding a column to a data table;
a determining module 820, configured to determine a corresponding sub-operation set based on the first table operation instruction, where the sub-operation set includes at least one data processing operation and at least one artificial intelligence AI operation, and the at least one AI operation includes obtaining an AI model through training based on data in the data table; and
a processing module 830, configured to: provide the data in the data table for an AI server; send a model creation request to the AI server, where the model creation request indicates the AI server to obtain the AI model through training based on the data in the data table; and obtain the AI model.

In a possible implementation, the first table operation instruction includes a first key field, the first key field is for defining the column as a predict column, and the predict column is for recording an inference result of the AI model. The determining module is configured to determine the corresponding sub-operation set based on the first key field.

In a possible implementation, the processing module 830 is further configured to generate an execution function for the AI model, where the execution function is for calling the AI model.

In a possible implementation, the processing module 830 is further configured to record a mapping relationship between the column in the data table and the AI model.

In a possible implementation, the processing module 830 is further configured to add the column to the data table based on the first table operation instruction.

In a possible implementation, the receiving module 810 is further configured to receive a call instruction for the execution function for the AI model. The processing module 830 is further configured to: input an inference condition parameter in the call instruction to the AI model to obtain a first inference result, and feed back the first inference result as a response to the call instruction.

In a possible implementation, the receiving module 810 is further configured to receive a first field query instruction for the column in the data table. The determining module 820 is further configured to determine, based on the mapping relationship between the column and the AI model, that the AI model needs to be used. The processing module 830 is further configured to: input a query condition parameter in the first field query instruction to the AI model to obtain a second inference result, and feed back the second inference result as a response to the first field query instruction.

In a possible implementation, the processing module 830 is further configured to record the inference result of the AI model into the column.

In a possible implementation, the receiving module 810 is further configured to receive a second field query instruction for the column in the data table. The determining module 820 is further configured to determine a target inference result from the column based on a query condition parameter in the second field query instruction. The processing module 830 is further configured to feed back the target inference result as a query result of the second field query instruction.

In a possible implementation, the receiving module 810 is further configured to receive a second table operation instruction, where the second table operation instruction is for deleting the column in the data table. The processing module 830 is further configured to delete the AI model and/or the execution function for the AI model based on the mapping relationship between the column and the AI model.

In a possible implementation, the model creation request further indicates the AI server to obtain the data from a third-party storage service. The processing module 830 is configured to store the data into the third-party storage service.

In a possible implementation, the receiving module 810 is further configured to receive a table creation instruction, where the table creation instruction is for creating the data table, and a second key field corresponding to a target column is added to the table creation instruction. The processing module 830 is further configured to: create the data table, and determine indication information based on the second key field, where the indication information indicates that the target column in the data table is for storing training calibration data; and after the corresponding sub-operation set is determined, provide the indication information for the AI server.

The receiving module 810, the determining module 820, and the processing module 830 may all be implemented by using software, or may be implemented by using hardware. For example, an example of the receiving module 810 is used below to describe an implementation of the receiving module 810. Similarly, for implementations of the determining module 820 and the processing module 830, refer to an implementation of the receiving module 810.

The module is used as an example of a software functional unit, and the receiving module 810 may include code run on a computing instance. The computing instance may include at least one of a physical host (a computing device), a virtual machine, and a container. Further, there may be one or more computing instances. For example, the receiving module 810 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the receiving module 810 may include at least one computing device, for example, a server. Alternatively, the receiving module 810 may be a device implemented by using an application-specific integrated circuit (application-specific integrated circuit, ASIC) or a programmable logic device (programmable logic device, PLD), or the like. The foregoing PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the receiving module 810 may be distributed in a same region, or may be distributed in different regions. The plurality of computing devices included in the receiving module 810 may be distributed in a same AZ, or may be distributed in different AZs. Similarly, the plurality of computing devices included in the receiving module 810 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the receiving module 810, the determining module 820, and the processing module 830 may be configured to perform any step in the method for executing a database operation instruction. Steps implemented by the receiving module 810, the determining module 820, and the processing module 830 may be specified as required. The receiving module 810, the determining module 820, and the processing module 830 respectively implement different steps in the method for executing a database operation instruction to implement all functions of the apparatus for executing a database operation instruction.

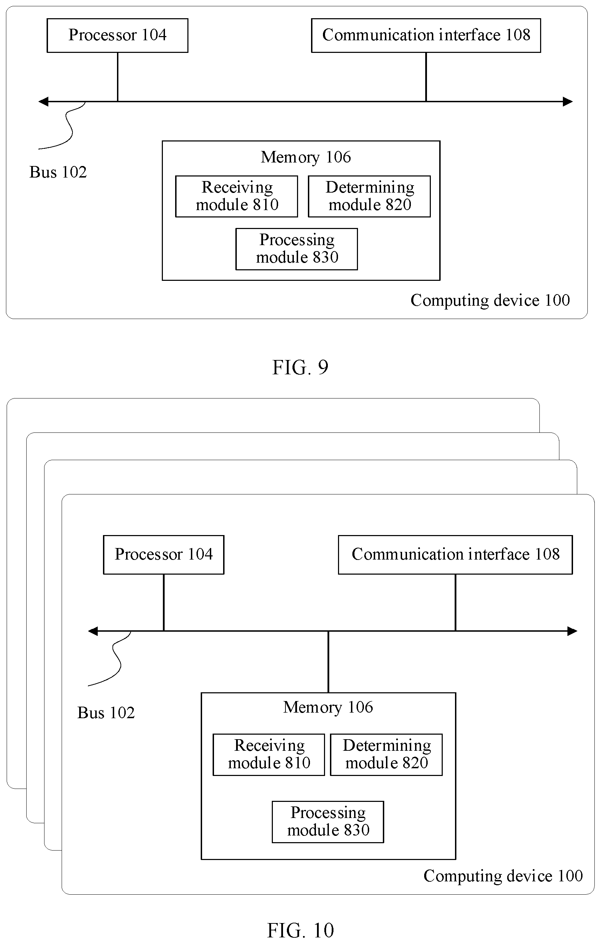

This disclosure further provides a computing device 100. As shown in FIG. 9, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this disclosure.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representations, only one line is used to represent the bus in FIG. 3, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the receiving module 810, the determining module 820, and the processing module 830, so as to implement the method for executing a database operation instruction. In other words, the memory 106 stores an instruction for the method for executing a database operation instruction.

Alternatively, the memory 106 stores executable code, and the processor 104 executes the executable code to separately implement functions of the receiving module 810, the determining module 820, and the processing module 830, so as to implement the method for executing a database operation instruction. In other words, the memory 106 stores an instruction for the method for executing a database operation instruction.

The communication interface 108 implements communication between the computing device 100 and another device or a communication network by using a transceiver module, for example, but not limited to a network interface card or a transceiver.

An embodiment of this disclosure further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 10, the computing device cluster includes at least one computing device 100. Memories 106 in the one or more computing devices 100 in the computing device cluster may store same instructions for the method for executing a database operation instruction.

In some possible implementations, the memories 106 in the one or more computing devices 100 in the computing device cluster may alternatively separately store some instructions for the method for executing a database operation instruction. In other words, a combination of one or more computing devices 100 may jointly execute the instruction for the method for executing a database operation instruction.

It should be noted that the memories 106 in different computing devices 100 in the computing device cluster may store different instructions for respectively performing some functions of the apparatus for executing a database operation instruction. In other words, instructions stored in the memories 106 in different computing devices 100 may implement functions of one or more of the receiving module 810, the determining module 820, and the processing module 830.

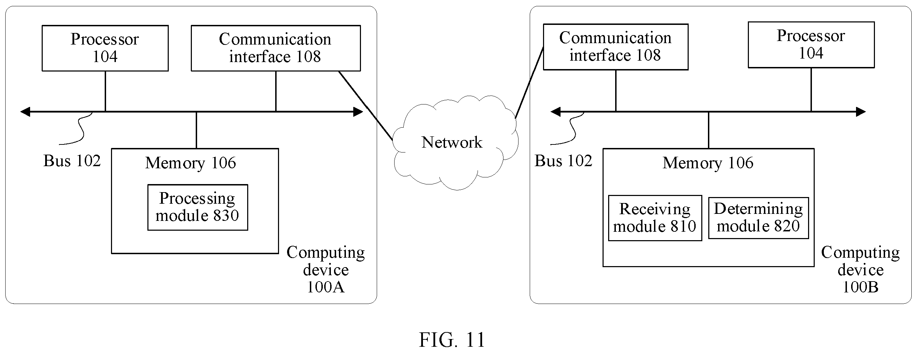

In some possible implementations, the one or more computing devices in the computing device cluster may be connected through a network. The network may be a wide area network, a local area network, or the like. FIG. 11 shows a possible implementation. As shown in FIG. 11, two computing devices, a computing device 100A and a computing device 100B, are connected through a network. Specifically, the computing devices are connected to the network through a communication interface in each computing device. In this possible implementation, a memory 106 in the computing device 100A stores an instruction for performing the function of the processing module 830. In addition, a memory 106 in the computing device 100B stores an instruction for performing the functions of the receiving module 810 and the determining module 820.

A connection manner between computing device clusters shown in FIG. 11 may be that, considering that a large amount of data needs to be stored in the method for executing a database operation instruction provided in this disclosure, it is considered that functions implemented by the receiving module 510 and the determining module 520 are performed by the computing device 100B.

It should be understood that functions of the computing device 100A shown in FIG. 11 may alternatively be completed by a plurality of computing devices 100. Similarly, functions of the computing device 100B may alternatively be performed by a plurality of computing devices 100.

An embodiment of this disclosure further provides another computing device cluster. For a connection relationship between computing devices in the computing device cluster, refer to the connection manner in the computing device cluster in FIG. 10 and FIG. 11 similarly. A difference is that memories 106 in one or more computing devices 100 in the computing device cluster may store same instructions for the method for executing a database operation instruction.

In some possible implementations, the memories 106 in the one or more computing devices 100 in the computing device cluster may alternatively separately store some instructions for the method for executing a database operation instruction. In other words, a combination of one or more computing devices 100 may jointly execute the instruction for the method for executing a database operation instruction.

An embodiment of this disclosure further provides a computer program product including instructions. The computer program product may be software or a program product that includes the instructions and that can run on a computing device or can be stored in any usable medium. When the computer program product is run on at least one computing device, the at least one computing device is caused to perform the method for executing a database operation instruction.

An embodiment of this disclosure further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions, where the instructions instruct a computing device to perform a method for a database operation instruction, or instruct a computing device to perform a method for a database operation instruction.

Finally, it should be noted that the foregoing embodiments are merely intended to describe the technical solutions of this disclosure, rather than to limit this disclosure. Although this disclosure is described in detail with reference to the foregoing embodiments, a person of ordinary skill in the art should understand that modifications to the technical solutions described in the foregoing embodiments or equivalent replacements to some technical features thereof may be made without departing from the protection scope of the technical solutions of embodiments of this disclosure.

## Claims

1. A method for executing a database operation instruction, wherein the method is applied to a database system, and the method comprises:
receiving a first table operation instruction, wherein the first table operation instruction is for adding a column to a data table;
determining a corresponding sub-operation set based on the first table operation instruction, wherein the sub-operation set comprises at least one data processing operation and at least one artificial intelligence AI operation, and the at least one AI operation comprises obtaining an AI model through training based on data in the data table;
providing the data in the data table for an AI server;
sending a model creation request to the AI server, wherein the model creation request indicates the AI server to obtain the AI model through training based on the data in the data table; and
obtaining the AI model.

2. The method according to claim 1, wherein the first table operation instruction comprises a first key field, the first key field is for defining the column as a predict column, and the predict column is for recording an inference result of the AI model; and
the determining the corresponding sub-operation set based on the first table operation instruction comprises: determining the corresponding sub-operation set based on the first key field.

3. The method according to claim 1 or 2, wherein the method further comprises:
generating an execution function for the AI model, wherein the execution function is for calling the AI model.

4. The method according to any one of claims 1 to 3, wherein the method further comprises:
recording a mapping relationship between the column in the data table and the AI model.

5. The method according to any one of claims 1 to 4, wherein the method further comprises:
adding the column to the data table based on the first table operation instruction.

6. The method according to any one of claims 3 to 5, wherein the method further comprises:
receiving a call instruction for the execution function for the AI model; and
inputting an inference condition parameter in the call instruction to the AI model to obtain a first inference result, and feeding back the first inference result as a response to the call instruction.

7. The method according to claim 4 or 5, wherein the method further comprises:
receiving a first field query instruction for the column in the data table;
determining, based on the mapping relationship between the column and the AI model, that the AI model needs to be used; and
inputting a query condition parameter in the first field query instruction to the AI model to obtain a second inference result, and feeding back the second inference result as a response to the first field query instruction.

8. The method according to any one of claims 1 to 7, wherein the method further comprises:
recording the inference result of the AI model into the column.

9. The method according to claim 8, wherein the method further comprises:
receiving a second field query instruction for the column in the data table;
determining a target inference result from the column based on a query condition parameter in the second field query instruction; and
feeding back the target inference result as a query result of the second field query instruction.

10. The method according to any one of claims 4 to 9, wherein the method further comprises:
receiving a second table operation instruction, wherein the second table operation instruction is for deleting the column in the data table; and
deleting the AI model and/or the execution function for the AI model based on the mapping relationship between the column and the AI model.

11. The method according to any one of claims 1 to 10, wherein the model creation request further indicates the AI server to obtain the data from a third-party storage service; and
the providing the data in the data table for the AI server comprises: storing the data into the third-party storage service.

12. The method according to any one of claims 1 to 11, wherein before the receiving the first table operation instruction, the method further comprises:
receiving a table creation instruction, wherein the table creation instruction is for creating the data table, and a second key field corresponding to a target column is added to the table creation instruction; and
creating the data table, and determining indication information based on the second key field, wherein the indication information indicates that the target column in the data table is for storing training calibration data; and
after the determining the corresponding sub-operation set, the method further comprises:
providing the indication information for the AI server.

13. An apparatus for executing a database operation instruction, wherein the apparatus is used in a database system, and the apparatus comprises:
a receiving module, configured to receive a first table operation instruction, wherein the first table operation instruction is for adding a column to a data table;
a determining module, configured to determine a corresponding sub-operation set based on the first table operation instruction, wherein the sub-operation set comprises at least one data processing operation and at least one artificial intelligence AI operation, and the at least one AI operation comprises obtaining an AI model through training based on data in the data table; and
a processing module, configured to: provide the data in the data table for an AI server; send a model creation request to the AI server, wherein the model creation request indicates the AI server to obtain the AI model through training based on the data in the data table; and obtain the AI model.

14. The apparatus according to claim 13, wherein the first table operation instruction comprises a first key field, the first key field is for defining the column as a predict column, and the predict column is for recording an inference result of the AI model; and
the determining module is configured to determine the corresponding sub-operation set based on the first key field.

15. The apparatus according to claim 13 or 14, wherein the processing module is further configured to generate an execution function for the AI model, and the execution function is for calling the AI model.

16. The apparatus according to any one of claims 13 to 15, wherein the processing module is further configured to record a mapping relationship between the column in the data table and the AI model.

17. The apparatus according to any one of claims 13 to 16, wherein the processing module is further configured to add the column to the data table based on the first table operation instruction.

18. The apparatus according to any one of claims 15 to 17, wherein the receiving module is further configured to receive a call instruction for the execution function for the AI model; and
the processing module is further configured to: input an inference condition parameter in the call instruction to the AI model to obtain a first inference result, and feed back the first inference result as a response to the call instruction.

19. The apparatus according to claim 16 or 17, wherein the receiving module is further configured to receive a first field query instruction for the column in the data table;
the determining module is further configured to determine, based on the mapping relationship between the column and the AI model, that the AI model needs to be used; and
the processing module is further configured to: input a query condition parameter in the first field query instruction to the AI model to obtain a second inference result, and feed back the second inference result as a response to the first field query instruction.

20. The apparatus according to any one of claims 13 to 19, wherein the processing module is further configured to record the inference result of the AI model into the column.

21. The apparatus according to claim 20, wherein the receiving module is further configured to receive a second field query instruction for the column in the data table;
the determining module is further configured to determine a target inference result from the column based on a query condition parameter in the second field query instruction; and
the processing module is further configured to feed back the target inference result as a query result of the second field query instruction.

22. The apparatus according to any one of claims 16 to 21, wherein the receiving module is further configured to receive a second table operation instruction, and the second table operation instruction is for deleting the column in the data table; and
the processing module is further configured to delete the AI model and/or the execution function for the AI model based on the mapping relationship between the column and the AI model.

23. The apparatus according to any one of claims 13 to 22, wherein the model creation request further indicates the AI server to obtain the data from a third-party storage service; and
the processing module is configured to store the data into the third-party storage service.

24. The apparatus according to any one of claims 13 to 23, wherein the receiving module is further configured to receive a table creation instruction, and the table creation instruction is for creating the data table, and a second key field corresponding to a target column is added to the table creation instruction; and
the processing module is further configured to: create the data table, and determine indication information based on the second key field, wherein the indication information indicates that the target column in the data table is for storing training calibration data; and after the corresponding sub-operation set is determined, provide the indication information for the AI server.

25. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 12.

26. A computer-readable storage medium, comprising computer program instructions, wherein when the computer program instructions are executed by a computing device cluster, the computing device cluster performs the method according to any one of claims 1 to 12.

27. A computer program product comprising instructions, wherein when the instructions are run by a computing device cluster, the computing device cluster is caused to perform the method according to any one of claims 1 to 12.
